# EUROPÄISCHE PATENTSCHRIFT

(11) **EP 4 172 532 B1**
(45) Veröffentlichungstag und Bekanntmachung des Hinweises auf die Patenterteilung: **17.04.2024**
(21) Anmeldenummer: 21737420.6
(22) Anmeldetag: 28.06.2021
(51) Int. Cl.: F17C 13/12

(54) **DRUCKGASSPEICHER UND VERFAHREN ZUM BETREIBEN EINES DRUCKGASSPEICHERS**
COMPRESSED GAS TANK AND METHOD FOR OPERATING A COMPRESSED GAS TANK
RÉSERVOIR DE GAZ COMPRIMÉ ET PROCÉDÉ DE FONCTIONNEMENT D'UN RÉSERVOIR DE GAZ COMPRIMÉ

(30) Priorität: 29.06.2020 DE 102020003894
(43) Veröffentlichungstag der Anmeldung: 03.05.2023
(73) Patentinhaber: cellcentric GmbH & Co. KG, 73230 Kirchheim unter Teck (DE)
(72) Erfinder: HAUSMANN, Philipp, 73230 Kirchheim (DE)
(74) Vertreter: Platzöder, Michael Christian
(86) Internationale Anmeldenummer: PCT/EP2021/067703
(87) Internationale Veröffentlichungsnummer: WO 2022/002853

(56) Entgegenhaltungen:
- WO-A1-2014/025446
- DE-T5- 10 297 661
- US-A- 2 557 199

## Beschreibung

Die Erfindung betrifft einen Druckgasspeicher mit einem Behälter, welcher zum Speichern eines komprimierten Brennstoffs ausgebildet ist, und mit wenigstens einem Druckentlastungsventil. Aufgrund eines Öffnens des wenigstens einen Druckentlastungsventils ist Brennstoff aus dem Behälter in eine Umgebung des Druckgasspeichers abführbar. Eine Katalysatoreinrichtung des Druckgasspeichers ist dazu ausgebildet, eine Oxidationsreaktion von aus dem Behälter stammendem Brennstoff mit Sauerstoff zu katalysieren. Des Weiteren betrifft die Erfindung ein Verfahren zum Betreiben eines solchen Druckgasspeichers.

Druckgasspeicher, wie sie beispielsweise als kryogene Kraftstoffspeicher für automobile Anwendungen zum Einsatz kommen, sind mit der Herausforderung konfrontiert, dass bei einem Wärmeeintrag von außen im Stillstand des Kraftfahrzeugs, also ohne dass Brennstoff aus dem Behälter zum Bereitstellen von Energie für die Fortbewegung des Kraftfahrzeugs verwendet wird, gasförmiger Brennstoff in die Umgebung des Druckgasspeichers abzuführen ist. Wenn tiefkalter oder kryogener und in flüssiger Form gespeicherter Brennstoff gasförmig nach außen beziehungsweise in die Umgebung abgeführt wird, so werden die damit einhergehenden Verluste an Brennstoff auch als sogenannte Boil-off-Verluste bezeichnet. Das Abführen von gasförmigem Brennstoff in die Umgebung über ein Druckentlastungsventil, welches beim Überschreiten eines Schwellenwerts des Drucks in dem Behälter selbsttätig öffnet, dient einer Druckentlastung des Behälters, in welchem der komprimierte Brennstoff gespeichert ist.

Üblicherweise findet eine derartige Druckentlastung bei der Verwendung von verflüssigtem Wasserstoff als komprimiertem Brennstoff bei Drücken von weniger als 10 Bar und insbesondere von etwa 6 Bar statt. Das in die Umgebung abgeführte Gas stellt einen Energieträger dar, sodass die mit dem Freisetzen eines derartigen Energieträgers einhergehenden potentiellen Gefahren vermieden werden sollten. Insbesondere gilt es zu vermeiden, dass gasförmiger Wasserstoff in eine geschlossene Umgebung abgegeben wird, wie sie etwa in einem Parkhaus, einer Garage, einer Werkstatt, einer Halle, unter Tage oder dergleichen vorliegt.

Vor diesem Hintergrund existieren Verfahren, aus dem Behälter eines Druckgasspeichers freigesetzten Brennstoff katalytisch zu verbrennen und dann die Produkte einer derartigen Oxidationsreaktion des Brennstoffs mit Sauerstoff in die Umgebung abzuführen.

Beispielsweise beschreibt die DE 102 97 661 T5 eine katalytische Verbrennung von Austrittsgasen, also von aus einem Druckbehälter austretendem Gas. Hierbei ist an einem Druckbehälter ein Druckentlastungsventil angeordnet, von welchem ausgehend ein Rohr zu einem katalytischen Reaktor führt. In dem katalytischen Reaktor reagiert das Gas im Fall von Wasserstoff mit Luftsauerstoff, um Wasser zu bilden. Der katalytische Reaktor weist eine erste Kammer auf, in welcher ein katalytischer Brenner angeordnet ist, dem das Gas und Luft zugeführt werden. In eine mittels eines Siebs von dieser Kammer getrennte zweite Kammer des katalytischen Reaktors ragt eine Zündkerze hinein. Die Zündkerze dient dazu, brennbares Gas zu zünden, welches ohne in dem katalytischen Brenner reagiert zu haben über das Sieb in die zweite Kammer gelangt. Die Zündeinrichtung in Form der Zündkerze wird insbesondere zu Beginn der katalytischen Verbrennung genutzt, um den katalytischen Brenner mittels der aufgrund des Zündens der Zündkerze gebildeten Flamme auf seine Anspringtemperatur zu bringen.

Bezüglich der zu gewährleistenden Sicherheit ist die Erzeugung einer brennenden Flamme in einer Kammer des katalytischen Reaktors zumindest anspruchsvoll im Hinblick auf die Auslegung beziehungsweise den Betrieb des Reaktors. Denn in dem benachbarten Druckbehälter und in dem katalytischen Reaktor selber ist brennbares Gas vorhanden.

Zudem muss durch ein zuverlässiges Zünden der Zündkerze sichergestellt werden, dass kein brennbares Gas aus dem katalytischen Reaktor in die Umgebung gelangt. Auch dies ist mit einem entsprechenden Aufwand verbunden.

Ferner offenbart das Dokument WO 2014/025446 A1 ein Verfahren zur Kontrolle des Abbrandes von Wasserstoff bei einem Kühlmittelverluststörfall in einem Kernkraftwerk, bei dem ein Ventil geöffnet wird, um ein erstes primäres Rückhaltegas strömen zu lassen.

Das Dokument US 2 557 199 A offenbart ein Verteilersystem zur automatischen Entlüftung und Zündung von brennbarem Gas, wie z.B. Wasserstoff, das aus Hochdruck-Druckgasbehältern entweicht, umfassend die Kombination eines Hochdruck-Brenngasbehälter-Verteilers mit einer Vielzahl von einzelnen Gasbehälter-Entlüftungsanschlüssen und einer gemeinsamen Gasauslassentlüftung.

Aufgabe der vorliegenden Erfindung ist es daher, einen Druckgasspeicher der eingangs genannten Art zu schaffen, bei welchem eine besonders zuverlässige und sichere Oxidation des aus dem Behälter stammenden Brennstoffs erreichbar ist, und ein entsprechendes Verfahren zum Betreiben eines Druckgasspeichers anzugeben. Diese Aufgabe wird durch einen Druckgasspeicher mit den Merkmalen des Patentanspruchs 1 und durch ein Verfahren mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Der erfindungsgemäße Druckgasspeicher, welcher insbesondere zur Verwendung in einem Kraftfahrzeug vorgesehen sein kann, umfasst einen Behälter, welcher zum Speichern eines komprimierten Brennstoffs ausgebildet ist. Der Druckgasspeicher weist wenigstens ein Druckentlastungsventil auf, wobei aufgrund des Öffnens des wenigstens einen Druckentlastungsventils Brennstoff aus dem Behälter in eine Umgebung des Druckgasspeichers abführbar ist. Eine Katalysatoreinrichtung des Druckgasspeichers ist dazu ausgebildet, eine Oxidationsreaktion von aus dem Behälter stammendem Brennstoff mit Sauerstoff zu katalysieren. Der Druckgasspeicher weist wenigstens ein Piezoelement auf, welches durch das Öffnen des wenigstens einen Druckentlastungsventils mit einem Druck beaufschlagbar ist. Durch den Druck ist ein Erzeugen zumindest eines Funkens mittels des wenigstens einen Piezoelements bewirkbar.

Mit anderen Worten wird also durch das Beaufschlagen des wenigstens einen Piezoelements mit dem Druck dafür gesorgt, dass mittels des wenigstens einen Piezoelements der zumindest eine Funke erzeugt wird. Folglich wirkt das wenigstens eine Piezoelement nach Art eines Zünders, welcher durch den zum Öffnen des wenigstens einen Druckentlastungsventils führenden Druck betätigt wird. Durch das Bereitstellen des wenigstens einen Funkens wird Zündenergie für den Beginn der Oxidationsreaktion des Brennstoffs mit dem Sauerstoff bereitgestellt. Die beginnende exotherme Oxidationsreaktion des Brennstoffs mit dem Sauerstoff sorgt dann nach Art einer Kettenreaktion für eine Umsetzung von weiteren Brennstoffmolekülen mit Sauerstoff. Auf diese Weise kann auch die Katalysatoreinrichtung auf eine Anspringtemperatur gebracht werden, bei welcher die katalytische Umsetzung des Brennstoffs mit dem Sauerstoff durch Oxidation in Form einer kalten Verbrennung stattfindet.

Dadurch, dass der beim Öffnen des wenigstens einen Druckentlastungsventils aufgebrachte Druck auch für die Druckbeaufschlagung des wenigstens einen Piezoelements sorgt, wird der wenigstens eine Funke besonders sicher und zuverlässig bereitgestellt. Folglich ist auch eine zuverlässige und sichere Oxidation des aus dem Behälter stammenden Brennstoffs erreichbar.

Es wird nämlich ausgelöst durch das Öffnen des wenigstens einen Druckentlastungsventils zugleich das wenigstens eine Piezoelement betätigt und somit die Zündenergie in Form des wenigstens einen Funkens durch das als Zündeinrichtung dienende Piezoelement bereitgestellt.

Verluste von aus dem Behälter stammendem Brennstoff können somit durch eine passive und intrinsisch sichere Vorrichtung, welche das wenigstens eine Piezoelement umfasst, sicher in energiearme Produkte beziehungsweise Medien umgewandelt werden.

Dadurch wird die passive Sicherheit des Druckgasspeichers bedeutend erhöht. Dies gilt insbesondere, wenn der Behälter des Druckgasspeichers als kryogener Kraftstoffspeicher beziehungsweise Brennstoffspeicher in dem Kraftfahrzeug verwendet wird. Ein Kraftfahrzeug mit einem solchen Druckgasspeicher kann dann nämlich auch in einem geschlossenen Bereich wie etwa einer geschlossenen Halle, einem Haus, einem Parkhaus, einer Garage, einer Werkstatt oder dergleichen abgestellt werden, solange dort in der Umgebungsluft genügend Sauerstoff für die Oxidationsreaktion vorhanden ist, bei welcher der Sauerstoff mit dem aus dem Behälter stammenden Brennstoff reagiert.

Der Behälter kann insbesondere zum Speichern von komprimiertem Brennstoff in Form von Flüssigwasserstoff (LH₂, liquid hydrogen) oder von kryo-komprimiertem Wasserstoff (C_{C}CH₂, cryo-compressed hydrogen) aber auch in Form von komprimiertem Wasserstoff (CH₂, compressed hydrogen) ausgebildet sein. In diesem Fall findet bei der kalten Verbrennung in Form der katalytischen Oxidationsreaktion des Wasserstoffs mit dem Sauerstoff eine Umwandlung des Brennstoffs in Wasserdampf (H₂O) statt.

Wenn es sich bei dem komprimierten Brennstoff um Flüssiggas etwa in Form von verflüssigten Kohlenwasserstoffen (LPG, liquified petroleum gas) oder in Form von Flüssigerdgas (LNG, liquified natural gas) handelt, so können bei der Oxidationsreaktion mit Sauerstoff auch andere Produkte wie etwa CO₂ und/oder Stickoxide entstehen.

Dasselbe gilt für die Verwendung von komprimiertem Erdgas (CNG, compressed natural gas) als dem komprimiertem Brennstoff.

Vorzugsweise ist das wenigstens eine Piezoelement zwischen einem Ventilteller des wenigstens einen Druckentlastungsventils und einer Abstützeinrichtung für ein Federelement des wenigstens einen Druckentlastungsventils angeordnet. Hierbei ist durch ein Bewegen des Ventiltellers weg von einem Ventilsitz des wenigstens einen Druckentlastungsventils das wenigstens eine Piezoelement mit dem Druck beaufschlagbar. Durch eine derartige Integration des wenigstens einen Piezoelements in das Druckentlastungsventil kann besonders sicher erreicht werden, dass jedes Öffnen des Druckentlastungsventils auch zu dem Generieren des wenigstens einen Funkens mittels des Piezoelements führt. Zudem kann durch die Schließkraft des Druckentlastungsventils sichergestellt werden, dass beim Öffnen des Druckentlastungsventils das wenigstens eine Piezoelement derart komprimiert wird, dass das wenigstens eine Piezoelement als piezoelektrischer Zündgenerator wirkt. Dies sorgt für eine zuverlässige Bereitstellung der Zündenergie für den Beginn der Oxidationsreaktion des Brennstoffs mit dem Sauerstoff.

Insbesondere kann das Federelement des wenigstens einen Druckentlastungsventils durch das wenigstens eine Piezoelement gebildet sein. Dann fungiert die Zündeinrichtung in Form des wenigstens einen Piezoelements zugleich als Schließeinrichtung des Druckentlastungsventils. Durch die Schließeinrichtung ist der Schwellenwert des Drucks vorgegeben, bei welchem das wenigstens eine Druckentlastungsventil öffnet. Beim Überschreiten des Schwellenwerts kommt es somit nicht nur zum Öffnen des Druckentlastungsventils, sondern zugleich auch zu dem Beaufschlagen des Piezoelements mit Druck, insbesondere zu einem Komprimieren des wenigstens einen Piezoelements. Durch diese Ausgestaltung kann besonders zuverlässig erreicht werden, dass das Öffnen des Druckentlastungsventils zugleich zum Erzeugen des wenigstens einen Funkens mittels des Piezoelements oder Piezozünders führt. Zudem ist eine derartige Ausbildung des Druckentlastungsventils aufwandsarm, da nicht zusätzlich zu dem Piezoelement ein separates Federelement vorgesehen zu werden braucht.

Es kann vorgesehen sein, dass der Druckgasspeicher lediglich ein Druckentlastungsventil aufweist, und dass durch das Öffnen dieses einen Druckentlastungsventils das wenigstens eine Piezoelement mit dem Druck beaufschlagt wird. Auf diese Weise ist ein besonders aufwandsarmer Druckgasspeicher bereitgestellt.

Alternativ kann vorgesehen sein, dass der Druckgasspeicher ein erstes Druckentlastungsventil und ein zweites Druckentlastungsventil aufweist. Hierbei ist das zweite Druckentlastungsventil in Strömungsrichtung des aus dem Behälter austretenden Brennstoffs gesehen stromabwärts des ersten Druckentlastungsventils angeordnet. Des Weiteren ist hierbei durch das Öffnen des zweiten Druckentlastungsventils das wenigstens eine Piezoelement mit dem Druck beaufschlagbar. Auf diese Weise ist besonders sicher vermieden, dass aufgrund des Erzeugens des wenigstens einen Funkens freigesetzte Energie in das Innere des Behälters eingetragen wird. Folglich ist eine besonders große Sicherheit erreichbar. Dies gilt insbesondere, wenn das erste Druckentlastungsventil bei einem höheren Druck öffnet als das zweite Druckentlastungsventil.

Vorzugsweise ist zwischen dem ersten Druckentlastungsventil und dem zweiten Druckentlastungsventil eine ein Rückströmen von Brennstoff hin zu dem Behälter behindernde Ventileinrichtung angeordnet. Auch dies ist einer erhöhten Sicherheit zuträglich, da ein Eintrag von bei der exothermen Oxidationsreaktion von Brennstoff mit Sauerstoff freigesetzter Wärmeenergie in das Innere des Behälters besonders weitgehend unterbunden ist.

Besonders einfach lässt sich die das Rückströmen behindernde Ventileinrichtung bereitstellen, wenn diese als passive Ventileinrichtung ausgebildet ist, welche einen Strömungswiderstand aufweist, der in die Strömungsrichtung geringer ist als in eine der Strömungsrichtung entgegengesetzte Flussrichtung. Eine derartige, passive Ventileinrichtung kann insbesondere als Teslaventil ausgebildet sein. Bei einer solchen Ventileinrichtung insbesondere in Form des Teslaventils sorgen die Formgebung von Strömungskanälen innerhalb der Ventileinrichtung für die Vorzugsrichtung bei dem Durchströmen in die Strömungsrichtung gegenüber einem Durchströmen in die entgegengesetzte Flussrichtung.

Vorzugsweise weist der Druckgasspeicher eine Auslasseinrichtung auf, über welche Produkte der Oxidationsreaktion des Brennstoffs in die Umgebung des Druckgasspeichers abführbar sind. Dies ermöglicht ein kontrolliertes Abführen der Produkte, welche bei der Oxidation des Brennstoffs mit dem Sauerstoff gebildet werden.

Zusätzlich oder alternativ kann vorgesehen sein, dass die Auslasseinrichtung als Teilbereich eines Abgasstrangs des Kraftfahrzeugs ausgebildet ist. Insbesondere wenn nämlich der Brennstoff aus dem Behälter des Druckgasspeichers einer Verbrennungskraftmaschine des Kraftfahrzeugs zugeführt werden soll, ist ohnehin ein Abgasstrang vorhanden, über welchen Abgase der Verbrennungskraftmaschine abgeführt werden können. Dementsprechend ist es sinnvoll, einen Teilbereich des Abgasstrangs als die Auslasseinrichtung des Druckgasspeichers zu nutzen.

In einen derartigen Teilbereich des Abgasstrangs kann mittels einer entsprechenden Einrichtung stromabwärts der Verbrennungskraftmaschine sogenannte Sekundärluft in das Abgas eingebracht werden, um den Sauerstoff für die Oxidationsreaktion bereitzustellen. Zusätzlich oder alternativ kann eine Ventilsteuerung der Verbrennungskraftmaschine so vorgenommen werden, dass über ein zumindest teilweise geöffnetes Einlassventil und ein zugleich zumindest teilweise geöffnetes Auslassventil Luft dem zu oxidierenden Brennstoff zugeführt werden kann. In diesem Fall kann wenigstens ein Brennraum der Verbrennungskraftmaschine, welchem das Einlassventil und das Auslassventil zugeordnet sind, als Lufteinlass der Auslasseinrichtung dienen, und es braucht keine Einrichtung zum Bereitstellen von Sekundärluft vorgesehen zu werden.

Auch wenn über die nicht als Teilbereich eines Abgasstrangs ausgebildete Auslasseinrichtung Produkte der Oxidationsreaktion des Brennstoffs in die Umgebung des Druckgasspeichers abgeführt werden sollen, weist der Druckgasspeicher vorzugsweise einen Lufteinlass auf. Auf diese Weise kann nämlich eine definierte Luftzufuhr zu dem Brennstoff im Bereich des wenigstens einen Piezoelements und/oder im Bereich der Katalysatoreinrichtung sichergestellt werden.

Vorzugsweise ist die Katalysatoreinrichtung in einem Abschnitt der Auslasseinrichtung angeordnet. Denn auf diese Weise kann anhand einer entsprechenden Luftzufuhr zu der Katalysatoreinrichtung dafür gesorgt werden, dann von diesem katalysiert die Oxidationsreaktion stattfinden kann, bei welcher der aus dem Behälter stammende Brennstoff in einer kalten Verbrennung mit Sauerstoff reagiert.

Als weiter vorteilhaft hat es sich gezeigt, wenn die Auslasseinrichtung einen Schalldämpfer aufweist. Denn dann werden im Betrieb des Druckgasspeichers die bei der Oxidationsreaktion von Sauerstoff und Brennstoff gebildeten Produkte besonders geräuscharm in die Umgebung abgeführt.

Vorzugsweise ist die Auslasseinrichtung in der Einbaulage des Druckgasspeichers im Wesentlichen vertikal ausgerichtet. Auf diese Weise kann der sich beim Umsetzen des Brennstoffs mit dem Sauerstoff in der Oxidationsreaktion einstellende Kamineffekt besonders vorteilhaft genutzt werden, um die Produkte der Oxidationsreaktion in die Umgebung des Druckgasspeichers abzuführen. Die vertikale Ausrichtung der Auslasseinrichtung ist jedoch auch im Hinblick darauf sinnvoll, dass bei der Oxidationsreaktion gebildetes Wasser einfach und zuverlässig aus der Auslasseinrichtung ablaufen kann. Dies ist insbesondere deswegen vorteilhaft, weil auf diese Weise Einschränkungen der Durchströmbarkeit der Auslasseinrichtung aufgrund einer Eisbildung besonders weitgehend vermieden sind.

Insbesondere kann die vertikal ausgerichtete Auslasseinrichtung eine einem Hochofen nachempfundene Formgebung aufweisen, bei welcher ein schachtförmiger Abschnitt der Auslasseinrichtung nach Art eines langgezogenen Kegelstumpfs ausgebildet ist. Jedoch sind auch andere Formgebungen vorteilhaft, welche insbesondere mit einer Verjüngung der Auslasseinrichtung zu einem Auslass hin einhergehen können.

Vorzugsweise verjüngt sich nämlich die Auslasseinrichtung zu einem Auslass hin. Durch eine derartige Formgebung kann besonders einfach sichergestellt werden, dass bei der exothermen Oxidationsreaktion gebildete Produkte zuverlässig in die Umgebung abgeführt werden. Denn eine derartige Auslasseinrichtung weist eine besonders strömungsgünstige Form auf.

Zusätzlich oder alternativ kann die Auslasseinrichtung eine endseitige Abdeckung aufweisen. Eine derartige Abdeckung verhindert zuverlässig ein Eintreten von unerwünschten Substanzen, insbesondere von Wasser, in die Auslasseinrichtung, sodass eine gute Durchströmbarkeit der Auslasseinrichtung sichergestellt ist.

Der Lufteinlass der Auslasseinrichtung kann ein Rückschlagventil aufweisen. Auf diese Weise ist sichergestellt, dass es über den Lufteinlass zu keinem Austreten von Flammen aus der Auslasseinrichtung in die Umgebung kommt.

Zusätzlich oder alternativ kann zu diesem Zweck der Lufteinlass eine Ventileinrichtung mit einem Strömungswiderstand aufweisen, welcher in eine erste Flussrichtung geringer ist als in eine der ersten Flussrichtung entgegengesetzte zweite Flussrichtung. Insbesondere kann somit die Ventileinrichtung als passive Ventileinrichtung etwa nach Art eines Teslaventils ausgebildet sein.

Vorzugweise weist zumindest eine Elektrode des wenigstens einen Piezoelements eine Beschichtung mit einem Katalysatormaterial auf. Das Katalysatormaterial ist dazu ausgebildet, eine Oxidationsreaktion des aus dem Behälter stammenden Brennstoffs mit Sauerstoff zu katalysieren. Auf diese Weise kann bereits an dem Piezoelement selber die Umsetzung von Brennstoff mit Sauerstoff katalysiert werden. So ist eine besonders weitgehende Umsetzung des Brennstoffs mit dem Sauerstoff in der Oxidationsreaktion ermöglicht.

Schließlich hat es sich als vorteilhaft gezeigt, wenn der Druckgasspeicher wenigstens zwei Piezoelemente aufweist, welche mit dem Druck beaufschlagbar sind. Selbst bei einer Funktionsstörung eines der Piezoelemente kann also das wenigstens eine weitere Piezoelement aufgrund des Beaufschlagtwerdens mit dem Druck den zumindest einen Funken bereitstellen oder erzeugen. Auch dies ist der Zuverlässigkeit und Sicherheit der Oxidation des Brennstoffs zuträglich.

Bei dem erfindungsgemäßen Verfahren zum Betreiben eines Druckgasspeichers, welcher insbesondere in einem Kraftfahrzeug zum Einsatz kommen kann, wird in einem Behälter des Druckgasspeichers ein komprimierter Brennstoff gespeichert. Aufgrund eines Öffnens wenigstens eines Druckentlastungsventils des Druckgasspeichers wird Brennstoff aus dem Behälter in eine Umgebung des Druckgasspeichers abgeführt. Mittels einer Katalysatoreinrichtung des Druckgasspeichers wird eine Oxidationsreaktion katalysiert, bei welcher aus dem Behälter stammender Brennstoff mit Sauerstoff reagiert. Der Druckgasspeicher weist wenigstens ein Piezoelement auf, welches durch das Öffnen des wenigstens einen Druckentlastungsventils mit einem Druck beaufschlagt wird. Aufgrund des Beaufschlagens des wenigstens einen Piezoelements mit dem Druck wird von dem wenigstens einen Piezoelement zumindest ein Funke erzeugt.

Durch den zumindest einen Funken wird Zündenergie für ein Auslösen der Oxidationsreaktion des Brennstoffs mit dem Sauerstoff bereitgestellt. Es findet also eine Umsetzung des Brennstoffs mit dem Sauerstoff statt. So kann besonders sicher vermieden werden, dass Brennstoff in noch nicht mittels Sauerstoff oxidierter Form in die Umgebung gelangt. Folglich wird eine besonders zuverlässige und sichere, insbesondere mittels der Katalysatoreinrichtung katalysierte, Oxidation des aus dem Behälter stammenden Brennstoffs erreicht.

Die für den erfindungsgemäßen Druckgasspeicher beschriebenen Vorteile und bevorzugten Ausführungsformen gelten auch für das erfindungsgemäße Verfahren und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: schematisch einen Druckgasspeicher eines Kraftfahrzeugs, bei welchem im Falle eines Ablassens von gasförmigem Brennstoff aus einem Behälter des Druckgasspeichers wenigstens ein Piezoelement betätigt wird, was eine Bildung von Funken zur Folge hat;
- Fig. 2: schematisch die Anordnung zweier Druckentlastungsventile im Bereich einer Druckentlastungseinrichtung des Druckgasspeichers; und
- Fig. 3: schematisch und in einer teilweise vergrößerten Ansicht eine Möglichkeit der Betätigung des wenigstens einen Piezoelements beim Öffnen eines der Druckentlastungsventile.

In den Fig. sind gleiche oder funktionsgleiche Elemente mit gleichen Bezugszeichen versehen.

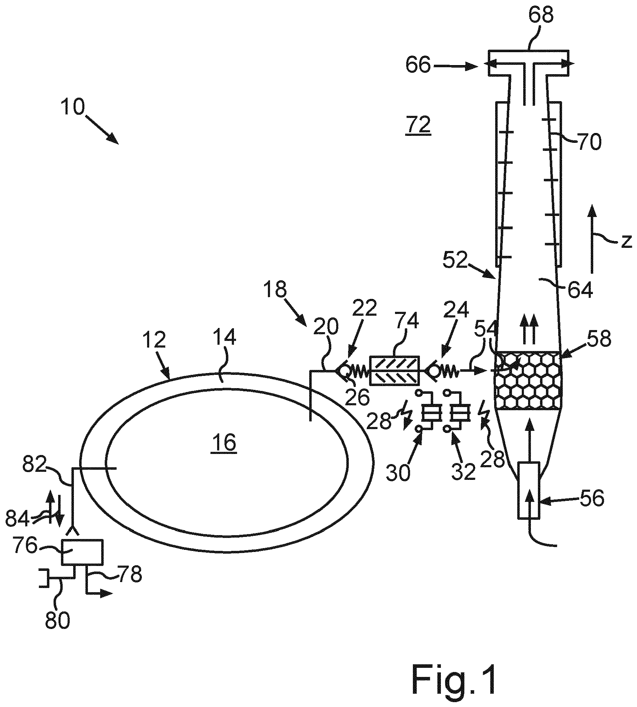

Ein in Fig. 1 stark schematisiert dargestellter Druckgasspeicher 10 umfasst einen Behälter 12, welcher eine thermisch isolierende Behälterwand 14 aufweist. Die Behälterwand 14 umgibt einen Aufnahmeraum 16 des Behälters 12, in welchem komprimierter Brennstoff gespeichert werden kann. Vorliegend soll beispielhaft davon ausgegangen werden, dass in dem umfangsseitig von der Behälterwand 14 umgebenen Aufnahmeraum 16 verflüssigter Wasserstoff gespeichert ist. Dementsprechend kann der Brennstoff in Form des flüssigen Wasserstoffs eine Dichte von 80 Gramm pro Liter aufweisen und bei einer Temperatur von beispielsweise -253 Grad Celsius in dem Aufnahmeraum 16 gespeichert sein.

Aufgrund einer Beaufschlagung des Brennstoffs mit Wärme etwa aufgrund von Wärmestrahlung und/oder Wärmeleitung und/oder Konvektion kann es dazu kommen, dass flüssiger Wasserstoff verdampft und in der Folge gasförmiger Wasserstoff aus dem Behälter 12 abzuführen ist, um eine mechanische Druckbelastung der Behälterwand 14 nicht zu groß werden zu lassen.

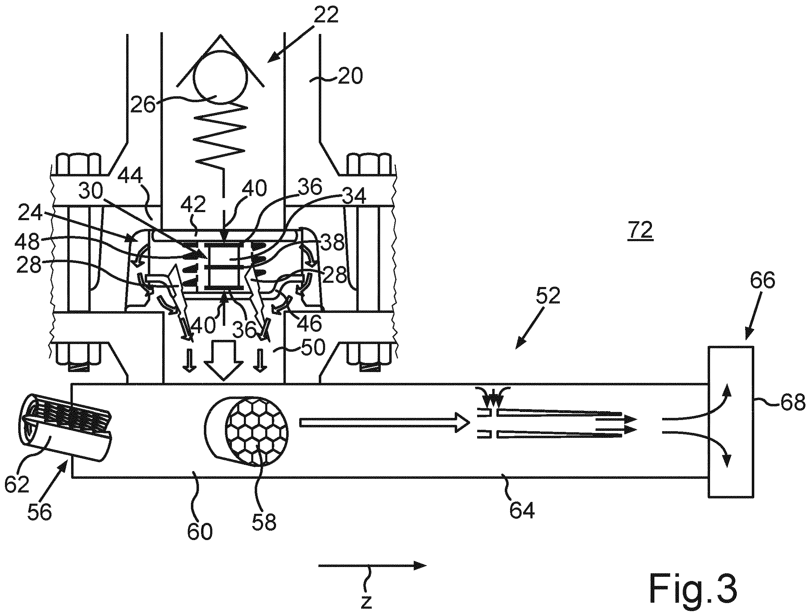

Zu diesem Zweck weist der Druckgasspeicher 10 eine Druckentlastungseinrichtung 18 auf, welche gemäß der schematischen Darstellung in Fig. 1 eine in den Aufnahmeraum 16 einmündende Leitung 20 umfasst. Ein Abschnitt der Leitung 20 ist in Fig. 3 schematisch dargestellt. In der Leitung 20 sind vorliegend ein erstes Druckentlastungsventil 22 und ein zweites Druckentlastungsventil 24 angeordnet. In Strömungsrichtung von gasförmigem Brennstoff aus dem Aufnahmeraum 16 heraus gesehen und dementsprechend in Strömungsrichtung des gasförmigen Brennstoffs durch die Leitung 20 gesehen ist das zweite Druckentlastungsventil 24 stromabwärts des ersten Druckentlastungsventils 22 angeordnet. Dementsprechend ist das zweite Druckentlastungsventil 24 mit dem ersten Druckentlastungsventil 22 in Reihe geschaltet. Sowohl das erste Druckentlastungsventil 22 als auch das zweite Druckentlastungsventil 24 öffnen, sobald ein Schwellenwert eines vorbestimmten Drucks überschritten wird.

Beispielsweise kann das erste Druckentlastungsventil 22 öffnen, wenn der auf einen Verschlusskörper 26 des ersten Druckentlastungsventils 22 wirkende Druck einen Wert von etwa 6 bar überschreitet. In analoger Weise kann das zweite Druckentlastungsventil 24 beispielsweise beim Überschreiten eines Schwellenwerts des Drucks von etwa 5 bar öffnen.

Vorliegend bewirkt das Öffnen des zweiten Druckentlastungsventils 24 das Erzeugen wenigstens eines Funkens 28, welcher in Fig. 1 und in Fig. 3 schematisch dargestellt ist. Der wenigstens eine Funke 28 wird durch Komprimieren wenigstens eines Piezoelements 30, 32 erzeugt, wobei in Fig. 1 beispielhaft zwei Piezoelemente 30, 32 schematisch nebeneinander angeordnet gezeigt sind.

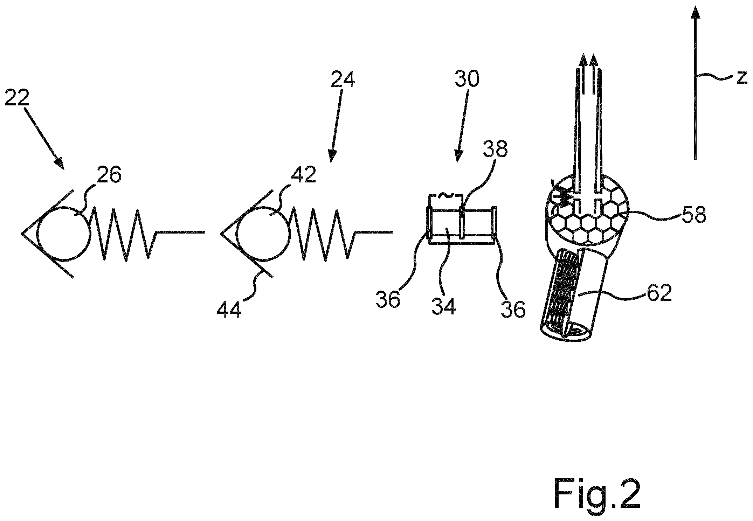

Aus Fig. 2 geht die Betätigung des wenigstens einen Piezoelements 30, 32 aufgrund des Öffnens des zweiten Druckentlastungsventils 24 deutlicher hervor. Jedoch ist in Fig. 2 der Übersichtlichkeit halber lediglich eines der beiden Piezoelemente 30, 32 dargestellt. Wenn beide Piezoelemente 30, 32 zugleich betätigt werden, so setzt jedes der Piezoelemente Funken 28 frei. Daher ist das Vorsehen von zwei nebeneinander angeordneten Zündeinrichtungen in Form der beiden Piezoelemente 30, 32 vorteilhaft.

Zur Veranschaulichung des Umwandelns von aus dem Aufnahmeraum 16 ausgetretenem gasförmigem Brennstoff in energiearme beziehungsweise oxidierte Produkte wird nachfolgend das Geschehen bei der Betätigung lediglich eines der Piezoelemente 30, 32 beispielhaft erläutert. Jedoch erfolgt die Betätigung des anderen der beiden Piezoelemente 30, 32 analog.

Gemäß Fig. 2 kann das Piezoelement 30 in an sich bekannter Weise etwa einen Kristall 34 und eine Mehrzahl von Elektroden 36, 38 aufweisen. Zwischen den äußeren Elektroden 36 und der zentralen Elektrode 38 kann es infolge eines Aufbringens eines Drucks auf den Kristall 34 und einer damit einhergehenden elastischen Verformung des Kristalls 34 zu einem Funkenüberschlag beziehungsweise zum Erzeugen der Funken 28 kommen. Die entsprechenden, die beiden äußeren Elektroden 36 aufeinander zu bewegenden Druckkräfte sind in Fig. 3 durch jeweilige Pfeile 40 veranschaulicht.

Gemäß Fig. 2 sorgt das Öffnen des zweiten Druckentlastungsventils 24 zugleich für die Druckbeaufschlagung des Piezoelements 30 und dadurch für das Erzeugen des zumindest einen Funkens 28. Hierbei kann insbesondere die Schließkraft des zweiten Druckentlastungsventils 24 so eingestellt sein, dass beim Öffnen des zweiten Druckentlastungsventils 24 das wenigstens eine Piezoelement 30, 32 als Zündgenerator wirkt, welcher zur Erzeugung des zumindest einen Funkens 28 führt. Die Zündeinrichtung in Form des wenigstens einen Piezoelements 30, 32 wird also vorzugsweise beim Öffnen des zweiten Druckentlastungsventils 24 betätigt.

Anhand von Fig. 3 soll eine beispielhafte Ausgestaltung einer Integration des wenigstens einen Piezoelements 30 in das zweite Druckentlastungsventil 24 veranschaulicht werden. Dementsprechend weist das zweite Druckentlastungsventil 24 einen bewegbaren Verschlusskörper in Form eines Ventiltellers 42 auf, welcher bei geschlossenem Druckentlastungsventil 24 an einem Ventilsitz 44 des Druckentlastungsventils 24 anliegt. Das Piezoelement 30 ist hierbei zwischen dem Ventilteller 42 und einer Abstützeinrichtung 46 angeordnet, an welcher ein Federelement 48 des Druckentlastungsventils 24 abgestützt ist.

Das Federelement 48, welches sich an der Abstützeinrichtung 46 abstützt, drückt den Ventilteller 42 gegen den Ventilsitz 44. Wenn also das Federelement 48 zusammengedrückt wird, so wird der Ventilteller 42 von dem Ventilsitz 44 weg bewegt, sodass der gasförmige Brennstoff entweichen kann. Die Bewegung des Ventiltellers 42 auf die Abstützeinrichtung 46 zu bewirkt hierbei auch das Zusammendrücken des Piezoelements 30, wie dies in Fig. 3 durch die Pfeile 40 veranschaulicht ist.

Es kann auch vorgesehen sein, dass durch das wenigstens eine Piezoelement 30, 32 das Federelement 48 des zweiten Druckentlastungsventils 24 gebildet ist. Dann braucht nicht zusätzlich zu dem wenigstens einen Piezoelement 30, 32 das Federelement 48 vorgesehen zu werden. Dementsprechend ist bei dieser besonders bauteilarmen Variante durch das wenigstens eine Piezoelement 30, 32 der Schwellenwert des Drucks vorgegeben, bei welchem das zweite Druckentlastungsventil 24 öffnet.

Das nach dem Öffnen des ersten Druckentlastungsventils 22 und vor dem Öffnen des zweiten Druckentlastungsventils 24 zwischen den beiden Druckentlastungsventilen 22, 24 eingeschlossene Gasvolumen entweicht nun, also nach dem Schließen des tankseitig angeordneten ersten Druckentlastungsventils 22 und bei zugleich geöffnetem zweiten Druckentlastungsventil 24, über eine (in Fig. 1 und Fig. 2 nicht gezeigte) Mündung 50 in eine kaminförmige Auslasseinrichtung 52. Der entsprechende Strömungsweg des gasförmigen Brennstoffs durch die Mündung 50 der Leitung 20 ist in Fig. 1 durch Pfeile 54 veranschaulicht.

Beim Komprimieren des wenigstens einen Piezoelements 30, 32 werden die Funken 28 erzeugt. Zudem ist im Bereich der Mündung 50, also der Anschlussstelle der Leitung 20 an die vorliegend nach Art eines Kamins ausgebildete Auslasseinrichtung 52, Sauerstoff vorhanden. Denn die Auslasseinrichtung 52 weist einen Lufteinlass 56 auf. Der zumindest eine Funke 28 stellt nun die Zündenergie für den Beginn einer Oxidationsreaktion des gasförmigen Brennstoffs, vorliegend also des Wasserstoffs, mit Sauerstoff aus der Luft, bereit. Die exotherme Oxidationsreaktion sorgt dafür, dass auch weitere Brennstoffmoleküle mit Sauerstoffmolekülen reagieren.

Dies bewirkt insbesondere das Aufheizen einer Katalysatoreinrichtung 58, welche vorliegend in einem unteren Abschnitt 60 der Auslasseinrichtung 52 angeordnet ist. An einem Katalysatormaterial der Katalysatoreinrichtung 58 findet bei geringer Umgebungstemperatur die Umwandlung des Brennstoffs in Oxidationsprodukte der Brennstoffmoleküle statt. Beispielsweise können bei der Umsetzung des Wasserstoffs mit Sauerstoff Temperaturen von 60 Grad Celsius bis 80 Grad Celsius auftreten, und es kann somit eine kalte Verbrennung von Wasserstoff mit Sauerstoff erreicht werden. Der Wasserstoff wird dementsprechend bei der mittels der Katalysatoreinrichtung 58 katalysierten Oxidationsreaktion mit Sauerstoff in Wasser beziehungsweise Wasserdampf umgewandelt.

Wenn es sich bei dem Brennstoff aus dem Behälter 12 um beispielsweise komprimiertes oder flüssiges Erdgas handelt, so treten entsprechend auch weitere Oxidationsprodukte wie etwa Kohlendioxid und Stickoxide auf. Auch hier findet jedoch in der Katalysatoreinrichtung 58 eine kalte Verbrennung des Brennstoffs und somit eine Umsetzung in energiearme und nicht mehr reaktionsfreudige Medien statt.

Aus Fig. 2 und aus Fig. 3 ist ersichtlich, dass der Lufteinlass 56 ein vorzugsweise passives Ventil 62 aufweisen kann, welches ein weitgehend ungehindertes Einströmen von Luft in die Auslasseinrichtung 52 und somit hin zu der Katalysatoreinrichtung 58 zulässt, jedoch ein Austreten von Luft über den Lufteinlass 56 möglichst weitgehend unterbindet.

Beispielsweise kann das Ventil 62 als Rückschlagventil ausgebildet sein oder als Teslaventil, bei welchem der Strömungswiderstand in eine Flussrichtung geringer ist als in die entgegengesetzte Flussrichtung. Ein derartiges Teslaventil ist in Fig. 2 und Fig. 3 schematisch und teilweise geschnitten im Bereich des Lufteinlasses 56 der kaminartigen Auslasseinrichtung 52 gezeigt.

Insbesondere aus Fig. 1 ist ersichtlich, dass sich die Auslasseinrichtung 52 vorzugsweise vertikal erstreckt. Dementsprechend ist eine Hochrichtung z der Auslasseinrichtung 52 in der Einbaulage des Druckgasspeichers 10 in das Kraftfahrzeug vorzugsweise parallel zur Fahrzeughochachse ausgerichtet. Auf diese Weise kann insbesondere in einem stromabwärts der Katalysatoreinrichtung 58 ausgebildeten Abschnitt 64 der Auslasseinrichtung 52 ein Kamineffekt im Betrieb der Druckentlastungseinrichtung 18 auftreten. Über die Mündung 50 des den Brennstoff durchleitenden zweiten Druckentlastungsventils 24 mit dem integrierten wenigstens einen Piezoelement 30, 32 oder Piezozünder kann somit der Brennstoff in die eine besonders strömungsgünstige Form aufweisende Auslasseinrichtung 52 eingebracht werden.

Beispielsweise kann die Auslasseinrichtung 52 die Form eines Hochofens aufweisen, bei welchem sich der sich an die Katalysatoreinrichtung 58 anschließende Abschnitt 64 zu einem Auslass 66 der Auslasseinrichtung 52 hin verjüngt. Im Bereich des Auslasses 66 kann die Auslasseinrichtung 52 eine endseitige Abdeckung 68 aufweisen. Dementsprechend können die bei der Oxidationsreaktion gebildeten Produkte nicht nach oben durch die Abdeckung 68 hindurchtreten, sondern sie werden an der Abdeckung 68 abgelenkt und treten seitlich aus der Auslasseinrichtung 52 aus.

Des Weiteren kann insbesondere in diesem Abschnitt 64 der Auslasseinrichtung 52 ein Schalldämpfer 70 angeordnet oder ausgebildet sein. Dadurch treten besonders geringe akustische Emissionen beim kalten Verbrennen des Brennstoffs an der Katalysatoreinrichtung 58 und dem Abführen der Produkte der Oxidationsreaktion in eine Umgebung 72 des Druckgasspeichers 10 auf.

Vorliegend bauen sich die Drücke beim Ablassen des gasförmigen Brennstoffs über die Druckentlastungseinrichtung 18 erneut auf, sobald in dem Aufnahmeraum 16 des Behälters 12 der zulässige Druck wieder überschritten wird. Mit jedem Öffnen des wenigstens einen Druckentlastungsventils 22, 24 wird auch die Zündeinrichtung in Form des wenigstens einen Piezoelements 30, 32 erneut betätigt, sodass es zu einem erneuten Generieren oder Erzeugen der Funken 28 kommt. Es kommt im Betrieb des Druckgasspeichers 10 somit auch zu einer intermittierend auftretenden kalten Verbrennung des gasförmigen Brennstoffs, bevor dieser über die Auslasseinrichtung 52 in die Umgebung 72 des Druckgasspeichers 10 gelangt.

Aus Fig. 1 ist weiter ersichtlich, dass in der Leitung 20 der Druckentlastungseinrichtung 18 zwischen dem ersten Druckentlastungsventil 22 und dem zweiten Druckentlastungsventil 24 ein Ventil 74 angeordnet sein kann, welches vorzugsweise ebenfalls beispielsweise als Teslaventil ausgebildet ist. Ein derartiges, passives Ventil 74 verhindert ein Rückströmen von Brennstoff beziehungsweise Wasserstoff hin zu dem ersten Druckentlastungsventil 22.

Des Weiteren ist in Fig. 1 schematisch gezeigt, dass an dem Behälter 12 eine weitere Ventileinrichtung 76 angeordnet sein kann, über welche eine Entnahme von Brennstoff aus dem Aufnahmeraum 16 und ein Einbringen von Brennstoff in den Aufnahmeraum 16 stattfinden kann. Dementsprechend weist die Ventileinrichtung 76 einen Ausgang 78 auf, über welchen der Brennstoff aus dem Aufnahmeraum 16 beispielsweise einem Brennstoffzellenstapel und/oder einer Verbrennungskraftmaschine des Kraftfahrzeugs zugeführt werden kann.

Des Weiteren kann die Ventileinrichtung 76 dem Absperren eines Einfüllstutzens 80 des Druckgasspeichers 10 dienen. Über den Einfüllstutzen 80 kann beim Betanken des Behälters 12 Brennstoff in den Aufnahmeraum 16 eingebracht werden. Über wenigstens eine in Fig. 1 schematisch gezeigte Leitung 82 kann die Tankarmatur in Form der Ventileinrichtung 76 mit dem Aufnahmeraum 16 des Behälters 12 in Verbindung stehen.

Entsprechende Pfeile 84 veranschaulichen in Fig. 1 das Einbringen von Brennstoff in den Aufnahmeraum 16 beim Betanken und das Entnehmen von Brennstoff im Betrieb.

### Bezugszeichenliste

- 10: Druckgasspeicher
- 12: Behälter
- 14: Behälterwand
- 16: Aufnahmeraum
- 18: Druckentlastungseinrichtung
- 20: Leitung
- 22: Druckentlastungsventil
- 24: Druckentlastungsventil
- 26: Verschlusskörper
- 28: Funke
- 30: Piezoelement
- 32: Piezoelement
- 34: Kristall
- 36: Elektrode
- 38: Elektrode
- 40: Pfeil
- 42: Ventilteller
- 44: Ventilsitz
- 46: Abstützeinrichtung
- 48: Federelement
- 50: Mündung
- 52: Auslasseinrichtung
- 54: Pfeil
- 56: Lufteinlass
- 58: Katalysatoreinrichtung
- 60: Abschnitt
- 62: Ventil
- 64: Abschnitt
- 66: Auslass
- 68: Abdeckung
- 70: Schalldämpfer
- 72: Umgebung
- 74: Ventil
- 76: Ventileinrichtung
- 78: Ausgang
- 80: Einfüllstutzen
- 82: Leitung
- 84: Pfeil
- z: Hochrichtung

## Patentansprüche

1. Druckgasspeicher, insbesondere für ein Kraftfahrzeug, mit einem Behälter (12), welcher zum Speichern eines komprimierten Brennstoffs ausgebildet ist, mit wenigstens einem Druckentlastungsventil (22, 24), wobei aufgrund eines Öffnens des wenigstens einen Druckentlastungsventils (22, 24) Brennstoff aus dem Behälter (12) in eine Umgebung (72) des Druckgasspeichers (10) abführbar ist, und mit einer Katalysatoreinrichtung (58), welche dazu ausgebildet ist, eine Oxidationsreaktion von aus dem Behälter (12) stammendem Brennstoff mit Sauerstoff zu katalysieren,
**dadurch gekennzeichnet, dass**
der Druckgasspeicher (10) wenigstens ein Piezoelement (30, 32) aufweist, welches durch das Öffnen des wenigstens einen Druckentlastungsventils (22, 24) mit einem Druck beaufschlagbar ist, wobei durch den Druck ein Erzeugen zumindest eines Funkens (28) mittels des wenigstens einen Piezoelements (30, 32) bewirkbar ist.

2. Druckgasspeicher nach Anspruch 1,
**dadurch gekennzeichnet, dass**
das wenigstens eine Piezoelement (30, 32) zwischen einem Ventilteller (42) des wenigstens einen Druckentlastungsventils (22, 24) und einer Abstützeinrichtung (46) für ein Federelement (48) des wenigstens einen Druckentlastungsventils (22, 24) angeordnet ist, wobei durch ein Bewegen des Ventiltellers (42) weg von einem Ventilsitz (44) des wenigstens einen Druckentlastungsventils (22, 24) das wenigstens eine Piezoelement (30, 32) mit dem Druck beaufschlagbar ist.

3. Druckgasspeicher nach Anspruch 2,
**dadurch gekennzeichnet, dass**
das Federelement (48) des wenigstens einen Druckentlastungsventils (22, 24) durch das wenigstens eine Piezoelement (30, 32) gebildet ist.

4. Druckgasspeicher nach einem der Ansprüche 1 bis 3,
**dadurch gekennzeichnet, dass**
der Druckgasspeicher (10) ein erstes Druckentlastungsventil (22) und ein zweites Druckentlastungsventil (24) aufweist, wobei das zweite Druckentlastungsventil (24) in Strömungsrichtung des aus dem Behälter (12) austretenden Brennstoffs gesehen stromabwärts des ersten Druckentlastungsventils (24) angeordnet ist, und wobei durch das Öffnen des zweiten Druckentlastungsventils (22) das wenigstens eine Piezoelement (30, 32) mit dem Druck beaufschlagbar ist.

5. Druckgasspeicher nach Anspruch 4,
zwischen dem erstes Druckentlastungsventil (22) und dem zweiten Druckentlastungsventil (24) eine ein Rückströmen von Brennstoff hin zu dem Behälter (12) behindernde Ventileinrichtung (74) angeordnet ist, insbesondere eine Ventileinrichtung (74), welche einen Strömungswiderstand aufweist, welcher in die Strömungsrichtung geringer ist als in eine der Strömungsrichtung entgegengesetzte Flussrichtung.

6. Druckgasspeicher nach einem der Ansprüche 1 bis 5,
**dadurch gekennzeichnet, dass**
der Druckgasspeicher (10) eine, insbesondere einen Lufteinlass (56) umfassende, Auslasseinrichtung (52) aufweist, über welche Produkte der Oxidationsreaktion des Brennstoffs in die Umgebung (72) des Druckgasspeichers (10) abführbar sind, und/oder welche als Teilbereich eines Abgasstrangs des Kraftfahrzeugs ausgebildet ist.

7. Druckgasspeicher nach Anspruch 6,
die, insbesondere sich zu einem Auslass (66) hin verjüngende, Auslasseinrichtung (52) in der Einbaulage des Druckgasspeichers im Wesentlichen vertikal ausgerichtet ist und/oder eine endseitige Abdeckung (68) aufweist, und/oder die Katalysatoreinrichtung (58) in einem Abschnitt (60) der, insbesondere einen Schalldämpfer (70) aufweisenden, Auslasseinrichtung (52) angeordnet ist.

8. Druckgasspeicher nach Anspruch 6 oder 7,
der Lufteinlass (56) ein Rückschlagventil und/oder eine Ventileinrichtung (62) mit einem Strömungswiderstand aufweist, welcher in eine erste Flussrichtung geringer ist als in eine der ersten Flussrichtung entgegengesetzte zweite Flussrichtung.

9. Druckgasspeicher nach einem der Ansprüche 1 bis 8,
**dadurch gekennzeichnet, dass**
zumindest eine Elektrode (36, 38) des wenigstens einen Piezoelements (30, 32) eine Beschichtung mit einem Katalysatormaterial aufweist, welches dazu ausgebildet ist, eine Oxidationsreaktion des aus dem Behälter (12) stammenden Brennstoffs mit Sauerstoff zu katalysieren und/oder der Druckgasspeicher (10) wenigstens zwei Piezoelemente (30, 32) aufweist, welche mit dem Druck beaufschlagbar sind.

10. Verfahren zum Betreiben eines Druckgasspeichers (10), insbesondere für ein Kraftfahrzeug, bei welchem in einem Behälter (12) des Druckgasspeichers (10) ein komprimierter Brennstoff gespeichert wird, und bei welchem aufgrund eines Öffnens wenigstens eines Druckentlastungsventils (22, 24) des Druckgasspeichers (10) Brennstoff aus dem Behälter (12) in eine Umgebung (72) des Druckgasspeichers (10) abgeführt wird, wobei mittels einer Katalysatoreinrichtung (58) des Druckgasspeichers (10) eine Oxidationsreaktion katalysiert wird, bei welcher aus dem Behälter (12) stammender Brennstoff mit Sauerstoff reagiert,
**dadurch gekennzeichnet, dass**
der Druckgasspeicher (10) wenigstens ein Piezoelement (30, 32) aufweist, welches durch das Öffnen des wenigstens einen Druckentlastungsventils (22, 24) mit einem Druck beaufschlagt wird, wobei aufgrund des Beaufschlagens des wenigstens einen Piezoelements (30, 32) mit dem Druck von dem wenigstens einen Piezoelement (30, 32) zumindest ein Funke (28) erzeugt wird.

## Claims

1. A compressed gas storage tank, in particular for a motor vehicle, with a container (12) which is designed to store a compressed fuel, with at least one pressure relief valve (22, 24), wherein due to opening of the at least one pressure relief valve (22, 24), fuel is dischargeable from the container (12) into an environment (72) of the compressed gas storage tank (10), and with a catalytic converter device (58) which is designed to catalyze an oxidation reaction of fuel originating from the container (12) with oxygen, **characterized in that**
the compressed gas storage tank (10) has at least one piezoelectric element (30, 32) to which a pressure can be applied by opening the at least one pressure relief valve (22, 24), wherein the pressure can cause at least one spark (28) to be generated by means of the at least one piezoelectric element (30, 32).

2. The compressed gas storage tank according to claim 1,
**characterized in that**
the at least one piezoelectric element (30, 32) is arranged between a valve disc (42) of the at least one pressure relief valve (22, 24) and a support device (46) for a spring element (48) of the at least one pressure relief valve (22, 24), wherein, the at least one piezoelectric element (30, 32) can be subjected to the pressure by moving the valve disk (42) away from a valve seat (44) of the at least one pressure relief valve (22, 24).

3. The compressed gas storage tank according to claim 2,
**characterized in that**
the spring element (48) of the at least one pressure relief valve (22, 24) is formed by the at least one piezoelectric element (30, 32).

4. The compressed gas storage tank according to any one of the claims 1 to 3,
**characterized in that**
the compressed gas storage tank (10) has a first pressure relief valve (22) and a second pressure relief valve (24), wherein the second pressure relief valve (24) is arranged downstream of the first pressure relief valve (24), as seen in the direction of flow of the fuel emerging from the container (12), and whereby it is possible for the at least one piezoelectric element (30, 32) to be subjected to the pressure by the opening of the second pressure relief valve (22).

5. The compressed gas storage tank according to claim 4,
between the first pressure relief valve (22) and the second pressure relief valve (24) a valve device (74) is arranged which impedes a backflow of fuel towards the container (12), in particular a valve device (74) which has a flow resistance which is lower in the flow direction than in a flow direction opposite to the flow direction.

6. The compressed gas storage tank according to any one of the claims 1 to 5,
**characterized in that**
the compressed gas storage tank (10) has an outlet device (52), in particular comprising an air inlet (56), through which products of the oxidation reaction of the fuel can be discharged into the environment (72) of the compressed gas storage tank (10), and/or which is designed as a section of an exhaust gas tract of the motor vehicle.

7. The compressed gas storage tank according to claim 6,
the outlet device (52), in particular tapering towards an outlet (66), is aligned essentially vertically in the installation position of the compressed gas storage tank and/or has a cover (68) at the end, and/or the catalytic converter device (58) is arranged in a section (60) of the outlet device (52), in particular having a silencer (70).

8. The compressed gas storage tank according to claim 6 or 7,
the air inlet (56) comprises a non-return valve and/or valve device (62) with a flow resistance which is lower in a first flow direction than in a second flow direction opposite to the first flow direction.

9. The compressed gas storage tank according to any one of the claims 1 to 8,
**characterized in that**
at least one electrode (36, 38) of the at least one piezoelectric element (30, 32) has a coating with a catalyst material which is designed to catalyze an oxidation reaction of the fuel originating from the container (12) with oxygen and/or the compressed gas storage tank (10) has at least two piezoelectric elements (30, 32) to which the pressure can be applied.

10. A method for operating a compressed gas storage tank (10), in particular for a motor vehicle, in which a compressed fuel is stored in a container (12) of the compressed gas storage tank (10), and in which, due to an opening of at least one pressure relief valve (22, 24) of the compressed gas storage tank (10), fuel is discharged from the container (12) into an environment (72) of the compressed gas storage tank (10), wherein an oxidation reaction is catalyzed by means of a catalytic converter device (58) of the compressed gas storage tank (10), in which oxidation reaction fuel originating from the container (12) reacts with oxygen,
**characterized in that**
the compressed gas storage tank (10) comprises at least one piezoelectric element (30, 32) which is pressurized by the opening of the at least one pressure relief valve (22, 24), wherein at least one spark (28) is generated by the at least one piezoelectric element (30, 32) due to the application of the pressure to the at least one piezoelectric element (30, 32).

## Revendications

1. Réservoir de gaz comprimé, en particulier pour un véhicule automobile, avec un récipient (12), qui est réalisé pour le stockage d'un combustible comprimé, avec au moins une soupape de décompression (22, 24), dans lequel en raison d'une ouverture d'au moins une soupape de décompression (22, 24), du combustible peut être évacué du récipient (12) dans un environnement (72) du réservoir de gaz comprimé (10), et avec un système catalyseur (58) qui est réalisé afin de catalyser une réaction d'oxydation du combustible provenant du récipient (12) avec de l'oxygène,
**caractérisé en ce que**
le réservoir de gaz comprimé (10) présente au moins un piézoélément (30, 32) qui peut être alimenté en une pression par l'ouverture d'au moins une soupape de décompression (22, 24), dans lequel une génération au moins d'une étincelle (28) peut être provoquée par la pression au moyen de l'au moins un piézoélément (30, 32).

2. Réservoir de gaz comprimé selon la revendication 1,
**caractérisé en ce que**
l'au moins un piézoélément (30, 32) est agencé entre une tête de soupape (42) de l'au moins une soupape de décompression (22, 24) et un système d'appui (46) pour un élément de ressort (48) de l'au moins une soupape de décompression (22, 24), dans lequel l'au moins un piézoélément (30, 32) peut être alimenté en pression par un déplacement de la tête de soupape (42) loin d'un siège de soupape (44) de l'au moins une soupape de décompression (22, 24).

3. Réservoir de gaz comprimé selon la revendication 2,
**caractérisé en ce que**
l'élément de ressort (48) de l'au moins une soupape de décompression (22, 24) est formé par l'au moins un piézoélément (30, 32).

4. Réservoir de gaz comprimé selon l'une quelconque des revendications 1 à 3,
**caractérisé en ce que**
le réservoir de gaz comprimé (10) présente une première soupape de décompression (22) et une seconde soupape de décompression (24), dans lequel la seconde soupape de décompression (24) est agencée vu dans le sens d'écoulement du combustible sortant du récipient (12) en aval de la première soupape de décompression (24), et dans lequel l'au moins un piézoélément (30, 32) peut être alimenté en pression par l'ouverture de la seconde soupape de décompression (22).

5. Réservoir de gaz comprimé selon la revendication 4,
un système de soupape (74) empêchant un reflux de combustible vers le récipient (12) est agencé entre la première soupape de décompression (22) et la seconde soupape de décompression (24), en particulier un système de soupape (74) qui présente une résistance à l'écoulement qui est plus faible dans le sens d'écoulement que dans un sens de flux opposé au sens d'écoulement.

6. Réservoir de gaz comprimé selon l'une quelconque des revendications 1 à 5,
**caractérisé en ce que**
le réservoir de gaz comprimé (10) présente un système de sortie (52), comprenant en particulier une entrée d'air (56), par le biais duquel des produits peuvent être évacués de la réaction d'oxydation du combustible dans l'environnement (72) du réservoir de gaz comprimé (10), et/ou qui est réalisé comme zone partielle d'un brin de gaz d'échappement du véhicule automobile.

7. Réservoir de gaz comprimé selon la revendication 6,
le système de sortie (52) se rétrécissant en particulier vers une sortie (66) est orienté sensiblement verticalement dans la position d'installation du réservoir de gaz comprimé et/ou présente un recouvrement (68) côté extrémité, et/ou le système catalyseur (58) est agencé dans une section (60) du système de sortie (52), présentant en particulier un amortisseur de bruit (70).

8. Réservoir de gaz comprimé selon la revendication 6 ou 7,
l'entrée d'air (56) présente un clapet antiretour et/ou un système de soupape (62) avec une résistance à l'écoulement qui est plus faible dans un premier sens de flux que dans un second sens de flux opposé au premier sens de flux.

9. Réservoir de gaz comprimé selon l'une quelconque des revendications 1 à 8,
**caractérisé en ce que**
au moins une électrode (36, 38) d'au moins un piézoélément (30, 32) présente un revêtement avec un matériau catalyseur qui est réalisé afin de catalyser une réaction d'oxydation du combustible provenant du récipient (12) avec de l'oxygène et/ou le réservoir de gaz comprimé (10) présente au moins deux piézoéléments (30, 32) qui peuvent être alimentés en pression.

10. Procédé de fonctionnement d'un réservoir de gaz comprimé (10), en particulier pour un véhicule automobile, pour lequel un combustible comprimé est stocké dans un récipient (12) du réservoir de gaz comprimé (10), et pour lequel en raison d'une ouverture au moins d'une soupape de décompression (22, 24) du réservoir de gaz comprimé (10), du combustible est évacué du récipient (12) dans un environnement (72) du réservoir de gaz comprimé (10), dans lequel une réaction d'oxydation est catalysée au moyen d'un système catalyseur (58) du récipient de gaz comprimé (10), pour laquelle du combustible provenant du récipient (12) réagit avec de l'oxygène,
**caractérisé en ce que**
le réservoir de gaz comprimé (10) présente au moins un piézoélément (30, 32) qui est alimenté par l'ouverture de l'au moins une soupape de décompression (22, 24) en une pression, dans lequel au moins une étincelle (28) est générée en raison de l'alimentation de l'au moins un piézoélément (30, 32) en pression par l'au moins un piézoélément (30, 32).
